(19) Europäisches Patentamt
European Patent Office
Office européen des brevets

(11) **EP 4 633 005 A1**

(12) **DEMANDE DE BREVET EUROPEEN**

(43) Date de publication:
**15.10.2025 Bulletin 2025/42**

(21) Numéro de dépôt: **25163119.8**

(22) Date de dépôt: **11.03.2025**

(51) Classification Internationale des Brevets (IPC):
**H02J 50/12** (2016.01)    **B60L 53/12** (2019.01)

(52) Classification Coopérative des Brevets (CPC):
**H02J 50/12; B60L 53/12**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **14.03.2024 FR 2402583**

(71) Demandeur: **Valeo eAutomotive Germany GmbH 91056 Erlangen (DE)**

(72) Inventeur: **ALLALI, Nicolas 95892 CERGY PONTOISE (FR)**

(74) Mandataire: **Valeo Powertrain Systems Service Propriété Intellectuelle Immeuble le Delta 14, avenue des Béguines 95892 Cergy Pontoise (FR)**

(54) **CIRCUIT D ALIMENTATION ÉLECTRIQUE D'UNE UNITÉ DE STOCKAGE D ÉNERGIE ÉLECTRIQUE DE VÉHICULE**

(57)    Circuit d'alimentation électrique (1) d'une unité de stockage d'énergie électrique (2), ce circuit d'alimentation électrique comprenant :
- un sous-circuit primaire (4), apte à être connecté à un réseau de tension (5), et
- un sous-circuit secondaire (6), apte à être connecté à une unité de stockage d'énergie électrique (2),

le sous-circuit primaire (4) et le sous-circuit secondaire (6) étant configurés de manière à échanger sans contact par couplage inductif de l'énergie électrique,
le sous circuit-secondaire (6) comprenant :
- une cellule inductive secondaire (20) pour l'échange sans contact par couplage inductif d'énergie électrique avec le sous-circuit primaire (4),
- un onduleur/redresseur (23) apte à réaliser une adaptation d'impédance de l'impédance sur l'entrée alternative de cet onduleur/redresseur (23), indépendamment de l'impédance de l'unité de stockage d'énergie électrique (2), cet onduleur/redresseur (23) comprenant au moins deux bras de commutation, chaque bras de commutation comprenant deux interrupteurs électroniques disposés de part et d'autre d'un point milieu, et
- une unité de contrôle (3) configurée pour commander l'un de ces deux bras pour qu'il commute à la fréquence de l'énergie électrique échangée sans contact par couplage inductif et avec un rapport cyclique de 50%, et pour commander l'autre de ces deux bras pour qu'il commute à une fréquence supérieure à celle de ladite énergie électrique et avec un rapport cyclique modulé selon le courant alternatif circulant dans la cellule inductive secondaire (20) et la tension sur l'entrée alternative de cet onduleur/redresseur (23).

[Fig 1]

## Description

La présente invention concerne un circuit d'alimentation électrique sans contact d'une unité de stockage d'énergie électrique de véhicule.

L'unité de stockage d'énergie électrique présente par exemple une tension nominale de 12V, 48V, 60V ou plus, par exemple supérieure à 300V, par exemple de 400V, 800V ou 1000V.

Il est connu d'alimenter électriquement par transmission sans contact par couplage inductif une unité de stockage d'énergie électrique de véhicule à une puissance comprise entre 3 et 50 kW, lorsque le véhicule est à l'arrêt ou lorsque celui-ci se déplace. Cette alimentation par transmission sans contact se fait alors au moyen de sous-circuits électriques distants couplés magnétiquement et accordés à la même fréquence de résonance. Les sous-circuits couplés magnétiquement mettent chacun en œuvre une cellule résonante de type LC. Cependant, pour transmettre un niveau de puissance satisfaisant, notamment plusieurs kW, il faut opérer à des fréquences élevées, notamment de l'ordre de 85 kHz ou plus, pour la fréquence de résonance de chaque sous-circuit résonant. En outre, ce type de solution nécessite d'opérer à faible distance entre les deux sous-circuits. Les niveaux de fréquence et de puissance mentionnés plus haut, pour une mise en œuvre en kW, peuvent en outre constituer un danger pour la santé des personnes exposées à proximité, ou un danger pour l'environnement en général.

La solution selon la demande WO2024/068468, qui ne fait pas partie de l'état de la technique publié, consiste à appliquer une tension alternative aux bornes d'une cellule inductive primaire couplée par couplage inductif à une cellule inductive secondaire qui, par adaptation d'impédance, permet de transmettre de l'énergie électrique à basse fréquence dans une unité de stockage d'énergie électrique, par exemple une batterie de véhicule électrique. L'adaptation d'impédance permet d'imposer sur l'entrée alternative de l'onduleur/redresseur une impédance indépendante de celle de l'unité de stockage d'énergie électrique, ce qui favorise l'échange sans contact par couplage inductif d'énergie électrique à basse fréquence.

Il existe un besoin pour réaliser une alimentation électrique d'une unité de stockage d'énergie électrique par transmission sans contact qui améliore encore les solutions connues.

L'invention a pour objet de répondre à ce besoin et elle y parvient, selon l'un de ses aspects, à l'aide d'un circuit d'alimentation électrique d'une unité de stockage d'énergie électrique, ce circuit d'alimentation électrique comprenant :

- un sous-circuit primaire, apte à être connecté à un réseau de tension, et
- un sous-circuit secondaire, apte à être connecté à une unité de stockage d'énergie électrique,

   le sous-circuit primaire et le sous-circuit secondaire étant configurés de manière à échanger sans contact par couplage inductif de l'énergie électrique et présentant un coefficient de couplage magnétique k entre eux le sous circuit-secondaire comprenant :

   - une cellule inductive secondaire pour l'échange sans contact par couplage inductif d'énergie électrique avec le sous-circuit primaire,
   - un onduleur/redresseur apte à réaliser une adaptation d'impédance de l'impédance sur l'entrée alternative de cet onduleur/redresseur, indépendamment de l'impédance de l'unité de stockage d'énergie électrique, cet onduleur/redresseur comprenant au moins deux bras de commutation, chaque bras de commutation comprenant deux interrupteurs électroniques disposés de part et d'autre d'un point milieu, et
   - une unité de contrôle configurée pour commander l'un de ces deux bras pour qu'il commute à la fréquence ($F_{req}$) de l'énergie électrique échangée sans contact par couplage inductif et avec un rapport cyclique de 50%, et pour commander l'autre de ces deux bras pour qu'il commute à une fréquence supérieure à celle de ladite énergie électrique et avec un rapport cyclique modulé selon le courant alternatif circulant dans la cellule inductive secondaire et la tension sur l'entrée alternative de cet onduleur/redresseur,

   la cellule inductive secondaire mettant en œuvre un condensateur secondaire et une inductance secondaire, la capacité du condensateur secondaire étant déterminée comme suit

$$[\text{Math}.1] \quad Cs = L_s \times 2 \times k \times \left(\frac{P}{V_{batt}^2}\right)^2$$

et la valeur de l'inductance secondaire étant déterminée comme suit

$$[\text{Math}.2] \quad Ls = \frac{1}{\sqrt{2 \times k}} \frac{V_{batt}^2}{2 \times \pi \times P \times F_{req}}$$

où $V_{batt}$ désigne la valeur de la tension nominale aux bornes de l'unité de stockage d'énergie électrique,
P désigne la puissance selon laquelle s'effectue l'échange d'énergie électrique sans contact par couplage inductif.

La valeur utilisée pour k est par exemple une valeur connue de manière approximative, par des essais antérieurs, par exemple. De façon connue, lorsqu'une première inductance d'inductance propre $L_1$ et une deuxième inductance d'inductance propre $L_2$ sont couplées entre elles, k relie ces inductances propres et leur inductance mutuelle M par l'équation :

$$[\text{Math.3}] \; M = k \times \sqrt{L_1 \times L_2}$$

De telles valeurs pour la capacité du condensateur secondaire et l'inductance secondaire permettent d'optimiser l'échange d'énergie électrique en réduisant au minimum le courant circulant dans la cellule inductive secondaire, et donc les pertes associées.

L'unité de contrôle peut être configurée pour commander les bras de commutation de l'onduleur/redresseur du sous-circuit secondaire de manière à imposer sur l'entrée alternative de l'onduleur/redresseur une impédance équivalente dont la valeur $R_{ref}$ est déterminée comme suit

$$[\text{Math.3}] \; Rref = \sqrt{\frac{k \times L_s}{c_s}}$$

On adapte ainsi l'impédance équivalente à l'impédance de sortie de la cellule inductive secondaire, ce qui permet de maximiser le rendement et la puissance transmissible.

La fréquence supérieure à celle de l'énergie électrique échangée sans contact par couplage inductif est par exemple supérieure à au moins 5 fois ou 10 fois la fréquence de l'énergie électrique échangée sans contact. Cette fréquence supérieure à celle de l'énergie électrique échangée sans contact par couplage inductif est par exemple comprise entre 50 kHz et 500 kHz, par exemple égale à 100 kHz ou de 150 kHz. En variante, il peut s'agir d'une fréquence comprise entre 450 kHz et 900 kHz, par exemple égale à 500 kHz ou à 850 kHz.

L'unité de contrôle est par exemple configurée pour commander:

- selon un premier mode de commande : un premier de ces deux bras pour qu'il commute à la fréquence de l'énergie électrique échangée sans contact par couplage inductif et avec un rapport cyclique de 50%, et un deuxième de ces deux bras pour qu'il commute à une fréquence supérieure à celle de ladite énergie électrique et avec un rapport cyclique modulé selon le courant alternatif circulant dans la cellule inductive secondaire et la tension sur l'entrée alternative de cet onduleur/redresseur, et
- selon un deuxième mode de commande : le deuxième bras pour qu'il commute à la fréquence de l'énergie électrique échangée sans contact par couplage inductif et avec un rapport cyclique de 50%, et le premier bras pour qu'il commute à une fréquence supérieure à celle de ladite énergie électrique et avec un rapport cyclique modulé selon le courant alternatif circulant dans la cellule inductive secondaire et la tension sur l'entrée alternative de cet onduleur/redresseur.

Une telle commande avec deux modes de commande permet de ne pas utiliser qu'un seul et même bras de l'onduleur/redresseur pour commuter à la fréquence supérieure à celle de l'énergie électrique échangée sans contact par couplage inductif. Une commutation à une telle fréquence génère des pertes plus importantes qu'à la fréquence de l'énergie électrique échangée sans contact par couplage inductif. On évite ainsi grâce à l'invention que le même bras de commutation subisse ces pertes élevées et présente un échauffement de température important, cet échauffement pouvant affecter l'intégrité des interrupteurs électroniques du bras. L'existence des deux modes de commande permet ainsi de ne pas solliciter uniquement un même bras de commutation à haute fréquence, et donc de mieux répartir les pertes et en conséquence l'échauffement des différents bras de commutation. On peut ainsi réduire la température des interrupteurs électroniques commandables des différents bras de commutation, ce qui améliore leur performance et leur intégrité. Cela peut aussi permettre d'éviter d'avoir à prévoir un système de refroidissement pour ces interrupteurs électroniques commandables ou de dimensionner en conséquence ces interrupteurs électroniques commandables, ce qui améliore la compacité et le coût du circuit d'alimentation électrique.

L'unité de contrôle peut être configurée pour appliquer en alternance le premier mode de commande et le deuxième mode de commande.

Le passage d'un mode de commande à l'autre peut se faire à l'issue d'un intervalle de temps prédéfini. Cet intervalle de temps prédéfini peut être fixe ou variable. Chaque intervalle de temps prédéfini se termine par exemple par un passage à 0A du courant circulant dans la cellule inductive secondaire.

Dans un exemple, le rapport cyclique $\alpha$ s'exprime à l'aide de l'expression suivante :

$$\propto = (R_{Ref} \times |I|)/V_{batt}$$

où :

- I désigne le courant circulant dans la cellule inductive secondaire,
- $R_{Ref}$ est comme déjà mentionné l'impédance équivalente sur l'entrée alternative de l'onduleur/redresseur, $R_{Ref}$ étant égale au ratio V/I où V est la tension entre les deux points milieux de l'onduleur/redresseur,

Dans tout ce qui précède, la cellule inductive secondaire peut être constituée par l'association en série du condensateur secondaire et de l'inductance secondaire. En variante, la cellule inductive secondaire peut être constituée par une inductance secondaire, les bras de commutation de l'onduleur/redresseur du sous-circuit secondaire étant commandés de manière à ce la tension aux bornes de l'entrée alternative de cet onduleur/redresseur émule la présence d'un condensateur secondaire monté en série avec la cellule inductive secondaire. Une telle commande permettant d'obtenir cette émulation est décrite dans la demande déposée en France le 2 juin 2023 par la Déposante sous le numéro 23 05573. Le contenu de cette demande est incorporé par référence à la présente demande en ce qui concerne la commande des rapports cycliques des bras de commutation de l'onduleur/redresseur.

L'inductance secondaire comprend par exemple:

- un enroulement électrique autre qu'en fil de Litz, notamment du fil électrique ou un enroulement obtenu par emboutissage d'au moins une plaque de métal tel que du cuivre pour définir une spirale, et
- un noyau magnétique.

Lorsque l'enroulement électrique est obtenu par emboutissage de plusieurs plaques de métal, chaque plaque de métal peut définir une couche en spirale, et ces différentes couches peuvent être empilées et connectées électriquement consécutivement. Le noyau magnétique est par exemple une plaque réalisée en plastoferrite. Tout matériau de perméabilité magnétique relative supérieure à 1 peut convenir pour réaliser le noyau magnétique.

L'échange sans contact par couplage inductif d'énergie électrique peut se faire à une fréquence inférieure à 10 kHz, par exemple inférieure à 5kHz, par exemple inférieure à 3kHz, ou encore inférieure à 2kHz ou 1kHz, notamment encore sensiblement égale à 400 Hz ou 50 Hz. Dans ce cas, et comme mentionné ci-dessus, l'inductance secondaire de la cellule inductive secondaire peut avoir son enroulement électrique réalisé en fil métallique, comme du cuivre, ou par emboutissage d'au moins une plaque métallique, comme du cuivre, définissant une spirale. Un tel conducteur électrique est plein, par opposition à du fil de Litz. Un conducteur électrique plein n'a pas sa section transversale évidée. En variante, l'enroulement électrique de l'inductance secondaire de la cellule inductive secondaire est en fil de Litz.

En variante, l'échange sans contact par couplage inductif d'énergie électrique peut se faire à une fréquence comprise entre 79 kHz et 90 kHz, étant notamment égale à 85 kHz.

Dans tout ce qui précède, le sous-circuit secondaire peut comprendre l'unité de stockage d'énergie électrique. Cette dernière peut être une batterie de type lithium-ion. Cette batterie a par exemple une tension nominale de 12V, 48V, 60V ou plus, par exemple supérieure à 300V, par exemple de 400V, 800V ou 1000V.

Dans une variante, l'onduleur/redresseur du sous-circuit secondaire peut être remplacé par le convertisseur de tension divulgué dans la demande déposée par la Déposante en France le 29/02/24 sous le numéro 24 02010. Le contenu de cette demande est incorporé par référence à la présente demande. Avec un tel convertisseur de tension, on peut réaliser l'adaptation d'impédance lorsque l'amplitude de la tension aux bornes de la cellule inductive secondaire est supérieure à la tension de l'unité de stockage d'énergie électrique. On peut ainsi charger des unités de stockage d'énergie électrique de moyenne ou basse tension, sans qu'il ne soit nécessaire dans ce but d'accroître le nombre de spires, et donc le poids et le coût, du sous-circuit primaire. On étend ainsi de façon simple et peu coûteuse la capacité à réaliser l'adaptation d'impédance en vue de transmettre de l'énergie électrique à basse fréquence dans une unité de stockage d'énergie électrique, pour des unités de stockage d'énergie électrique dont la tension nominale peut être de 12V, 48V, 60V, voire jusqu'à des valeurs inférieures ou égales à 200V, voire même inférieures ou égales à 300V.

Dans tout ce qui suit, le sous-circuit primaire peut comprendre :

- une cellule inductive primaire pour l'échange sans contact par couplage inductif d'énergie électrique avec la cellule inductive secondaire, et
- un onduleur/redresseur comprenant au moins deux bras de commutation, chaque bras de commutation comprenant deux interrupteurs électroniques commandables de part et d'autre d'un point milieu.

La cellule inductive secondaire et la cellule inductive primaire sont avantageusement choisies de manière à ce qu'elles présentent la même fréquence de résonance.

Dans tout ce qui précède, la cellule inductive primaire peut être constituée par l'association en série d'un condensateur primaire et d'une inductance primaire. En variante, la cellule inductive primaire peut être constituée par une inductance primaire, les bras de commutation de l'onduleur/redresseur du sous-circuit primaire étant commandés de manière à ce la tension aux bornes de l'entrée alternative de cet onduleur/redresseur émule la présence d'un condensateur primaire monté en série avec la cellule inductive primaire. Une telle commande permettant d'obtenir cette émulation est décrite dans la demande déposée en France le 2 juin 2023 par la Déposante sous le numéro 23 05573. Le contenu de cette demande est incorporé par référence à la présente demande en ce qui concerne la commande des rapports cycliques des bras de commutation de l'onduleur/redresseur.

Dans le cas d'un échange sans contact par couplage inductif d'énergie électrique à fréquence inférieure à 10kHz, notamment inférieure à 5kHz, l'inductance primaire de la cellule inductive primaire peut avoir son enroulement électrique réalisé en fil métallique, comme du cuivre, ou par emboutissage d'une plaque métallique, comme du cuivre. Cette plaque de métal emboutie peut définir une spirale. Le cas échéant, plusieurs plaques de métal sont embouties, chaque plaque de métal définit une couche en spirale, et ces différentes couches sont empilées et connectées électriquement consécutivement. Un tel conducteur électrique est plein, par opposition à du fil de Litz. Un conducteur électrique plein n'a pas sa section transversale évidée. En variante, cet enroulement électrique de l'inductance primaire de la cellule inductive primaire est en fil de Litz. Comme déjà mentionné, en variante, l'échange sans contact par couplage inductif d'énergie électrique peut se faire à une fréquence comprise entre 79 kHz et 90 kHz, étant notamment égale à 85 kHz.

Le cas échéant, le sous-circuit primaire peut comprendre un autre onduleur/redresseur monté en amont de l'onduleur/redresseur aux points milieux duquel l'enroulement primaire du transformateur est monté, et cet autre onduleur/redresseur permet de redresser la tension alternative reçue du réseau lorsque la charge s'effectue depuis un réseau de tension alternative. Cet autre onduleur/redresseur peut alors réaliser une fonction de correction de facteur de puissance (« Power factor correction » en anglais). Une telle correction permet de façon connue que le courant prélevé sur le réseau soit le plus proche d'un sinus parfait à la pulsation du réseau. On réduit ainsi le courant réactif et les sous-harmoniques qui augmentent les pertes énergétiques en conduction.

Dans tout ce qui précède, le réseau électrique fournit par exemple une tension efficace nominale de 230V avec une fréquence de 50 Hz ou 60 Hz. Le réseau électrique est par exemple monophasé. Le réseau électrique est par exemple un réseau électrique régional ou national. En variante, il peut s'agir d'un réseau local indépendant, comprenant par exemple une ou plusieurs batteries alimentées par des sources d'énergie telles que éoliennes, des panneaux solaires, des piles à combustible ou des générateurs d'hydroélectricité.

En variante encore, le réseau électrique peut fournir une tension continue.

L'unité de contrôle peut être configurée pour commander les bras de commutation du sous-circuit primaire et/ou du sous-circuit secondaire. Au sens de la présente invention, lorsqu'un bras commute, chacun de ses deux interrupteurs électroniques commandables est ouvert et fermé de façon complémentaire avec la même fréquence de commutation.

Dans tout ce qui précède, l'unité de contrôle peut être configurée pour commander les différents bras de commutation de manière à réaliser sélectivement :

- une charge de l'unité de stockage d'énergie électrique depuis le réseau de tension, ou
- une charge du réseau de tension depuis l'unité de stockage d'énergie électrique.

Ainsi, en fonction du besoin, l'échange d'énergie électrique peut s'effectuer dans un sens ou dans l'autre.

Dans tout ce qui précède, chaque bras de commutation comprend des interrupteurs électroniques commandables, notamment exclusivement des interrupteurs électroniques qui sont commandables, et chaque interrupteur électronique commandable est par exemple un transistor, par exemple bipolaire, MOS ou IGBT, ou un thyristor. Chaque interrupteur électronique commandable est par exemple bidirectionnel.

Dans tout ce qui précède, l'unité de contrôle peut être un circuit de traitement numérique, par exemple un circuit intégré de type ASIC (« Application-specific integrated circuit » en anglais) ou un microcontrôleur. Cette unité de contrôle peut commander tous les bras de commutation du circuit électrique, qu'ils appartiennent au sous-circuit primaire ou au sous-circuit secondaire.

L'unité de contrôle peut en variante comprendre un module de commande du sous-circuit primaire et un module de commande du sous-circuit secondaire.

En variante, encore chaque sous-circuit présente une unité de contrôle qui lui est propre, cette dernière pouvant être un circuit de traitement numérique tel qu'un microcontrôleur.

L'invention a encore pour objet, selon un autre de ses aspects, un composant pour l'alimentation électrique d'une unité de stockage d'énergie électrique, comprenant le circuit électrique tel que défini ci-dessus, le composant définissant notamment une structure supportant de manière rigidement couplés entre eux le sous-circuit primaire et le sous-circuit secondaire. Un tel composant est couramment appelé « chargeur embarqué » (« on board charger » en anglais). Ce composant est apte à être embarqué dans un véhicule hybride ou électrique.

L'invention a encore pour objet, selon un autre de ses aspects, un dispositif pour l'alimentation électrique d'une unité de stockage d'énergie électrique, comprenant:

- une borne de charge pour véhicule hybride ou électrique, dans laquelle est disposé le sous-circuit primaire du circuit électrique tel que défini ci-dessus ou à laquelle ce sous-circuit primaire est électriquement connecté, et
- un composant apte à être embarqué dans un véhicule hybride ou électrique, dans lequel est disposé le sous-circuit secondaire du circuit électrique tel que défini ci-dessus.

Cette borne reçoit alors de l'énergie électrique d'un réseau électrique via un câble qui peut être un câble monophasé ou un câble triphasé. Dans ce cas, le circuit primaire et le circuit secondaire ne sont pas intégrés à un même composant physique.

L'invention a encore pour objet, selon un autre de ses aspects, une cellule inductive secondaire pour sous-circuit secondaire d'un circuit d'alimentation électrique d'une unité de stockage d'énergie électrique, tel que ci-dessus, cette cellule inductive secondaire comprenant une inductance secondaire, cette inductance secondaire comprenant :

- un enroulement électrique obtenu par emboutissage d'au moins une plaque de métal tel que du cuivre pour définir une spirale, et
- un noyau magnétique.

L'enroulement électrique peut être obtenu par emboutissage de plusieurs plaques de métal, chaque plaque de métal peut définir une couche en spirale, et ces différentes couches peuvent être empilées et connectées électriquement consécutivement.

L'enroulement électrique obtenu par emboutissage d'au moins une plaque de métal tel que du cuivre pour définir une spirale peut en variante ou en combinaison être utilisé pour réaliser l'inductance primaire de la cellule inductive primaire.

L'invention a encore pour objet, selon un autre de ses aspects, un procédé de réalisation d'un circuit d'alimentation électrique d'une unité de stockage d'énergie électrique, ce circuit d'alimentation électrique comprenant :

- un sous-circuit primaire, connecté à un réseau de tension, et
- un sous-circuit secondaire, connecté à une unité de stockage d'énergie électrique,

  le sous-circuit primaire et le sous-circuit secondaire étant configurés de manière à échanger sans contact par couplage inductif de l'énergie électrique,
  le sous circuit-secondaire comprenant :

  - une cellule inductive secondaire pour l'échange sans contact par couplage inductif d'énergie électrique avec le sous-circuit primaire, cette cellule inductive secondaire mettant en œuvre un condensateur secondaire et une inductance secondaire,
  - un onduleur/redresseur apte à réaliser une adaptation d'impédance de l'impédance sur l'entrée alternative de cet onduleur/redresseur, indépendamment de l'impédance de l'unité de stockage d'énergie électrique, cet onduleur/redresseur comprenant au moins deux bras de commutation, chaque bras de commutation comprenant deux interrupteurs électroniques disposés de part et d'autre d'un point milieu, et
  - une unité de contrôle configurée pour commander l'un de ces deux bras pour qu'il commute à la fréquence ($F_{req}$) de l'énergie électrique échangée sans contact par couplage inductif et avec un rapport cyclique de 50%, et pour commander l'autre de ces deux bras pour qu'il commute à une fréquence supérieure à celle de ladite énergie électrique et avec un rapport cyclique modulé selon le courant alternatif circulant dans la cellule inductive secondaire et la tension sur l'entrée alternative de cet onduleur/redresseur,

  procédé dans lequel :

  - on connaît : la valeur de la fréquence $F_{réq}$, la valeur de la puissance P selon laquelle s'effectue l'échange d'énergie électrique sans contact par couplage inductif, la valeur de la tension $V_{batt}$ aux bornes de l'unité de stockage d'énergie électrique, et la valeur du coefficient de couplage magnétique k entre le sous-circuit primaire et le sous-circuit secondaire, et
  - on détermine la capacité du condensateur secondaire et la valeur de l'inductance secondaire comme suit

$$[\text{Math.}5] \; Cs = L_s \times 2 \times k \times \left(\frac{P}{V_{batt}^2}\right)^2$$

$$[\text{Math.}6] \; Ls = \frac{1}{\sqrt{2 \times k}} \frac{V_{batt}^2}{2 \times \pi \times P \times F_{req}}$$

Tout ce qui précède s'applique encore à ce procédé.

L'unité de contrôle est par exemple configurée pour commander les bras de commutation de manière à imposer sur l'entrée alternative de l'onduleur/redresseur une impédance équivalente dont la valeur $R_{ref}$ est déterminée comme suit

$$[\text{Math.}7] \; Rref = \sqrt{\frac{k \times L_s}{C_s}}$$

L'invention pourra être mieux comprise à la lecture de la description qui va suivre d'un exemple non-limitatif de mise en œuvre de celle-ci et à l'examen du dessin annexé sur lequel :

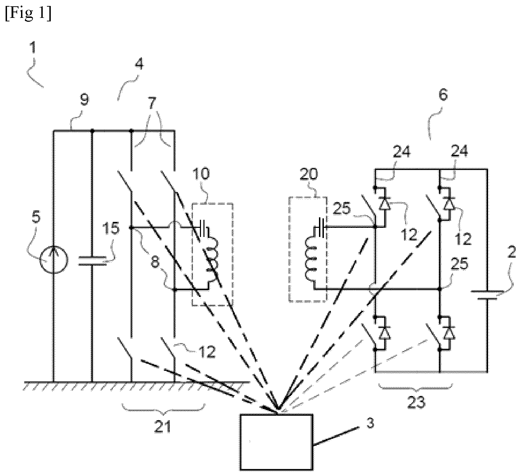

[Fig.1] représente de façon schématique un circuit d'alimentation électrique selon un exemple de mise en œuvre de l'invention.

On a représenté sur la figure 1, un circuit 1 d'alimentation électrique d'une unité de stockage d'énergie électrique 2. Cette unité de stockage d'énergie électrique 2 est par exemple une batterie de véhicule, pouvant présenter une tension nominale de 48V, 60V, 300V, 400V, 800V ou plus. Cette batterie sert à alimenter un système de propulsion de véhicule électrique ou hybride.

Ce circuit d'alimentation électrique 1 comprend :

- une unité de contrôle 3,
- un sous-circuit primaire 4, apte à être connecté à un réseau de tension 5, et
- un sous-circuit secondaire 6, comprenant l'unité de stockage d'énergie électrique 2.

Le circuit d'alimentation électrique 1 met en œuvre un échange d'énergie électrique sans contact par couplage inductif entre le sous-circuit primaire 4 et le sous-circuit secondaire 6, pour la charge de l'unité de stockage d'énergie électrique 2, avec un coefficient de couplage k.

L'unité de contrôle 3 est par exemple un microcontrôleur ou toute unité de traitement numérique.

Dans l'exemple considéré, le sous-circuit primaire 4 comprend :

- un connecteur 9 apte à être branché au réseau électrique,
- un onduleur/redresseur 21 comprenant ici deux bras de commutation 7, montés en parallèle et dont le fonctionnement sera décrit ci-après, et
- une cellule inductive primaire 10 dont le fonctionnement sera décrit ci-après.

Le réseau électrique 5 est ici représenté sous la forme d'un réseau de tension continue mais il peut en variante s'agir d'un réseau de tension alternative fournissant par exemple une tension efficace nominale de 230V avec une fréquence de 50 Hz ou 60 Hz. Un tel réseau électrique de tension alternative peut être monophasé ou triphasé. D'autres tensions sont possibles, par exemple une tension monophasée de valeur efficace de 120V et de fréquence de 60Hz, une tension biphasée de valeur efficace de 208V et de fréquence de 60Hz ou encore une tension triphasée de 240V et de fréquence de 60Hz, cette liste n'étant pas exhaustive. Dans le cas où le réseau fournit une tension alternative, un autre onduleur/redresseur non représenté est prévu entre le réseau et l'onduleur/redresseur 21, cet autre onduleur/redresseur assurant par exemple une fonction de correction du facteur de puissance.

Comme on peut le voir sur la Figure 1, un condensateur 15 peut être disposé en parallèle des deux bras de commutation 7. Ce dernier présente par exemple une capacité comprise entre 1μF et 1mF, par exemple de 10μF.

Chaque bras 7 du sous-circuit primaire 4 comprend ici deux interrupteurs électroniques commandables 12, tels que des transistors MOS, IGBT ou bipolaires, ou des thyristors, disposés de part et d'autre d'un point milieu 8. Les deux interrupteurs 12 d'un même bras de commutation 7 sont ici commandés à l'aide d'un même rapport cyclique, l'un en opposition de l'autre avec un temps mort par l'unité de contrôle 3.

Le premier bras 7 comprend ainsi deux interrupteurs électroniques commandables 12 et un premier point milieu 8 auquel une borne de la cellule inductive primaire 10 est connectée et ces deux interrupteurs électroniques commandables 12 sont commandés selon un rapport cyclique $\alpha_1$.

Le deuxième bras 7 comprend ainsi deux interrupteurs électroniques commandables 12 et un deuxième point milieu 8 auquel l'autre borne de la cellule inductive primaire 10 est connectée et ces deux interrupteurs électroniques commandables 12 sont commandés selon un rapport cyclique $\alpha_2$.

Dans l'exemple considéré, aucun composant physique n'est interposé entre les deux points milieux 8 de l'onduleur/redresseur 21 et la cellule inductive primaire 10.

La cellule inductive primaire 10 peut être formée par l'association en série : d'une inductance primaire permettant la génération d'énergie magnétique, et d'un condensateur primaire, pour former une cellule résonante. L'inductance primaire a par exemple une valeur comprise entre 10$\mu$H et 10mH, et le condensateur primaire a par exemple une capacité comprise entre 10 nF et 10 mF. Dans le cas d'un échange sans contact par couplage inductif d'énergie électrique à fréquence inférieure à 5 kHz, l'inductance est par exemple réalisée par bobinage d'un fil de cuivre, autre que du fil de Litz.

En variante, la cellule inductive primaire 10 est formée par une inductance primaire uniquement. Aucun condensateur physique n'est présent, la présence en série de ce condensateur primaire avec l'inductance primaire de la cellule inductive primaire 10 étant émulée par la commande des bras de commutation 7 par l'unité de contrôle primaire 3 à l'aide des rapports cycliques $\alpha_1$ et $\alpha_2$. Ici encore, et toujours dans le cas d'un échange sans contact par couplage inductif d'énergie électrique à fréquence inférieure à 5 kHz, l'inductance primaire peut avoir son enroulement électrique réalisé par bobinage d'un fil de cuivre.

On va maintenant décrire un exemple de sous-circuit secondaire 6 en référence à la figure 1. Ce sous-circuit secondaire 6 comprend une cellule inductive secondaire 20 pour l'échange d'énergie sans contact avec la cellule inductive primaire 10, et un onduleur/redresseur 23, apte à réaliser une adaptation de l'impédance équivalente sur son entrée alternative (donc du côté de la cellule inductive secondaire 20), de manière à faire varier cette impédance indépendamment de l'impédance de l'unité de stockage d'énergie électrique 2.

L'onduleur/redresseur 23 comprend dans l'exemple décrit deux bras de commutation 24 disposés en parallèle, chaque bras comprenant deux interrupteurs électroniques commandables 12 disposés de part et d'autre d'un point milieu 25.

Les deux interrupteurs 12 d'un même bras de commutation 24 sont ici commandés à l'aide d'un même rapport cyclique, l'un en opposition de l'autre avec un temps mort par l'unité de contrôle 3.

Le premier bras 24 comprend ainsi deux interrupteurs électroniques commandables 12 et un premier point milieu 25 auquel une borne de la cellule inductive secondaire 20 est connectée et ces deux interrupteurs électroniques commandables 12 sont commandés selon un rapport cyclique $\alpha_3$.

Le deuxième bras 24 comprend ainsi deux interrupteurs électroniques commandables 12 et un deuxième point milieu 25 auquel l'autre borne de la cellule inductive secondaire 20 est connectée et ces deux interrupteurs électroniques commandables 12 sont commandés selon un rapport cyclique $\alpha_4$.

La cellule inductive secondaire 20 est ici formée par l'association en série : d'une inductance secondaire permettant de récupérer l'énergie magnétique issue de la cellule inductive primaire 10, et d'un condensateur secondaire, formant ainsi une cellule résonante. L'inductance secondaire comprend par exemple un enroulement électrique réalisé par bobinage d'un fil de cuivre, autre que du fil de Litz, ou par emboutissage de plaque de cuivre pour former un enroulement en spirale.

Selon l'invention, la valeur de l'inductance secondaire est déterminée à l'aide de l'équation suivante

$$[\text{Math.8}] \quad Ls = \frac{1}{\sqrt{2 \times k}} \frac{V_{batt}^2}{2 \times \pi \times P \times F_{req}}$$

et la capacité du condensateur secondaire de la cellule inductive secondaire 20 est déterminée à l'aide de l'équation suivante :

$$[\text{Math.9}] \quad Cs = L_s \times 2 \times k \times \left(\frac{P}{V_{batt}^2}\right)^2$$

Dans ces équations, $V_{batt}$ désigne la valeur de la tension nominale aux bornes de l'unité de stockage d'énergie électrique 2 et P désigne la puissance selon laquelle s'effectue l'échange d'énergie électrique sans contact par couplage inductif.

Dans l'exemple considéré, l'inductance a une valeur comprise entre 100$\mu$H et 10mH et le condensateur a une capacité comprise entre 100nF et 10mF.

Plus précisément, en considérant un puissance P de 7kW pour l'échange d'énergie électrique sans contact par couplage inductif et une fréquence de 3kHz pour cet échange, avec un coefficient de couplage k de 0,4 et une tension nominale $V_{batt}$ de 400V, on obtient pour l'inductance secondaire à l'aide de l'équation 7 la valeur de 1,356 mH. On en déduit pour la capacité du condensateur secondaire à l'aide de l'équation 8 la valeur de 2,076$\mu$F.

Par ailleurs, l'unité de contrôle 3 agit dans l'exemple décrit sur la commande de l'onduleur/redresseur 23 de manière à imposer l'impédance équivalente $R_{Ref}$ aux bornes de l'entrée alternative, définie entre les deux points milieux 25 des bras de commutation 24, indépendamment de l'impédance sur la sortie continue de cet onduleur/redresseur 23.

L'impédance équivalente $R_{Ref}$ correspond au ratio V/I où V est la tension entre les deux points milieux 25, et I l'intensité du courant circulant dans la cellule inductive secondaire 20.

$R_{Ref}$ a par exemple une valeur comprise entre 0,1 'Ω et 40 'Ω, notamment entre 2 'Ω et 30 'Ω, notamment entre 5 'Ω et 15 'Ω. Pour une configuration de recharge donnée, cette configuration étant notamment déterminée par l'un au moins parmi : la position du sous-circuit secondaire 6 par rapport au sous-circuit primaire 4 et/ou le niveau de puissance à transmettre et/ou la tension aux bornes de l'unité de stockage d'énergie électrique 2, $R_{Ref}$ peut avoir une valeur fixe et cette valeur est par exemple dans la plage précitée. D'une configuration de charge à l'autre, par exemple en cas d'éloignement plus important entre le sous-circuit primaire 4 et le sous-circuit secondaire 6 et/ou pour tenir compte du vieillissement du système, la valeur de $R_{Ref}$ peut être modifiée, restant notamment dans la plage précitée.

$R_{Ref}$ a dans l'exemple considéré une valeur déterminée à l'aide de l'équation suivante :

$$[\text{Math.}10] \quad Rref = \sqrt{\frac{k \times L_s}{C_s}}$$

Avec les valeurs précédentes, on obtient pour $R_{ref}$ la valeur de 16,162'Ω.

L'onduleur/redresseur 23 de la figure 1 est par exemple commandé comme suit par l'unité de contrôle 3, pour réaliser l'adaptation d'impédance sur l'entrée alternative de l'onduleur/redresseur 23:

- l'un des deux bras de commutation 24 commute à la fréquence de l'énergie électrique échangée sans contact par couplage inductif et avec un rapport cyclique $\alpha_3$ de 50%, et
- l'autre des deux bras de commutation 24 commute à une fréquence supérieure à celle de l'énergie électrique échangée sans contact, par exemple à au moins 5 fois ou 10 fois cette fréquence de l'énergie électrique échangée sans contact, et avec un rapport cyclique $\alpha_4$ modulé selon le courant alternatif circulant dans la cellule inductive secondaire 20 et selon la tension aux bornes de l'entrée alternative de l'onduleur/redresseur 23. L'un des interrupteurs commandables 12 du bras de commutation 24 qui commute à une fréquence supérieure à celle de l'énergie électrique échangée sans contact est par exemple piloté selon le rapport cyclique $\alpha_4$ tandis que l'autre interrupteur commandable de ce bras 24 est piloté selon le rapport cyclique 1- $\alpha_4$, et $\alpha_4$ est par exemple déterminé selon l'équation ci-dessous :

$$\alpha_4 = (R_{ref} \times |I|)/V_{batt}$$

Selon un exemple, cette commande est effectuée comme suit :

- selon un premier mode de commande : le premier bras de commutation 24 est commandé pour qu'il commute à la fréquence de l'énergie électrique échangée sans contact par couplage inductif et avec le rapport cyclique de 50%, et le deuxième bras de commutation 24 est commandé pour qu'il commute à une fréquence supérieure à celle de ladite énergie électrique et avec un rapport cyclique modulé selon le courant alternatif circulant dans la cellule inductive secondaire 20 et la tension sur l'entrée alternative de cet onduleur/redresseur 23, et
- selon un deuxième mode de commande : le deuxième bras de commutation 24 est commandé pour qu'il commute à la fréquence de l'énergie électrique échangée sans contact par couplage inductif et avec un rapport cyclique de 50%, et le premier bras de commutation 24 est commandé pour qu'il commute à une fréquence supérieure à celle de ladite énergie électrique et avec un rapport cyclique modulé selon le courant alternatif circulant dans la cellule inductive secondaire et la tension sur l'entrée alternative de cet onduleur/redresseur.

L'unité de contrôle 3 est ici configurée pour appliquer en alternance le premier mode de commande et le deuxième mode de commande.

Le passage d'un mode de commande à l'autre se fait par exemple à l'issue d'un intervalle de temps prédéfini qui est ici déterminé en fonction de la fréquence de l'énergie électrique échangée sans contact par couplage inductif. Il s'agit par exemple d'un multiple entier de l'inverse de cette fréquence. La durée prédéfinie peut être de l'ordre de la seconde.

On a constaté expérimentalement que la mise en œuvre de l'alternance des modes de commande ci-dessus peut permettre, par rapport à la situation initiale dans laquelle seul un des bras de commutation 24 commute à haute fréquence, que la température des interrupteurs électroniques commandables 12 soit homogène entre les deux bras de commutation 24 de l'onduleur/redresseur 23. Une diminution de la température en °C de plus de 25% par rapport à la température des interrupteurs électroniques commandables 12 les plus « chauds » selon la situation initiale est possible.

L'invention n'est pas limitée à l'exemple qui vient d'être décrit.

Bien qu'une unique unité de contrôle 3 soit représentée, d'autres réalisations sont possibles, par exemple la possibilité qu'une unité de contrôle soit dédiée à la commande du sous-circuit primaire 4 et qu'une autre unité de contrôle soit dédiée à la commande du sous-circuit secondaire 6.

**Revendications**

**1.** Circuit d'alimentation électrique (1) d'une unité de stockage d'énergie électrique (2), ce circuit d'alimentation électrique (1) comprenant :

- un sous-circuit primaire (4), apte à être connecté à un réseau de tension (5), et
- un sous-circuit secondaire (6), apte à être connecté à une unité de stockage d'énergie électrique (2),

le sous-circuit primaire (4) et le sous-circuit secondaire (6) étant configurés de manière à échanger sans contact par couplage inductif de l'énergie électrique et présentant un coefficient de couplage magnétique k entre eux,
le sous circuit-secondaire (6) comprenant :

- une cellule inductive secondaire (20) pour l'échange sans contact par couplage inductif d'énergie électrique avec le sous-circuit primaire (4),
- un onduleur/redresseur (23) apte à réaliser une adaptation d'impédance de l'impédance sur l'entrée alternative de cet onduleur/redresseur (23), indépendamment de l'impédance de l'unité de stockage d'énergie électrique (2), cet onduleur/redresseur (23) comprenant au moins deux bras de commutation (24), chaque bras de commutation (24) comprenant deux interrupteurs électroniques (12) commandables disposés de part et d'autre d'un point milieu (25), et
- une unité de contrôle (3) configurée pour commander l'un de ces deux bras pour qu'il commute à la fréquence ($F_{req}$) de l'énergie électrique échangée sans contact par couplage inductif et avec un rapport cyclique de 50%, et pour commander l'autre de ces deux bras pour qu'il commute à une fréquence supérieure à celle de ladite énergie électrique et avec un rapport cyclique modulé selon le courant alternatif circulant dans la cellule inductive secondaire (20) et la tension sur l'entrée alternative de cet onduleur/redresseur (23),

la cellule inductive secondaire (20) mettant en œuvre un condensateur secondaire et une inductance secondaire,
la capacité du condensateur secondaire étant déterminée comme suit

$$[\text{Math.}11] \quad Cs = L_s \times 2 \times k \times \left(\frac{P}{V_{batt}^2}\right)^2$$

et la valeur de l'inductance secondaire étant déterminée comme suit

$$[\text{Math.}12] \quad Ls = \frac{1}{\sqrt{2 \times k}} \frac{V_{batt}^2}{2 \times \pi \times P \times F_{req}}$$

Où $V_{batt}$ désigne la valeur de la tension nominale aux bornes de l'unité de stockage d'énergie électrique (2), P désigne la puissance selon laquelle s'effectue l'échange d'énergie électrique sans contact par couplage inductif.

**2.** Circuit selon la revendication 1, l'unité de contrôle (3) étant configurée pour commander les bras de commutation (24) de manière à imposer sur l'entrée alternative de l'onduleur/redresseur (23) une impédance équivalente dont la valeur $R_{ref}$ est déterminée comme suit

$$[\text{Math.}13] \quad Rref = \sqrt{\frac{k \times L_s}{C_s}}$$

**3.** Circuit selon la revendication 1 ou 2, l'unité de contrôle (3) étant configurée pour appliquer en alternance :

- un premier mode de commande selon lequel un premier (24) de ces deux bras est commandé pour qu'il commute à la fréquence de l'énergie électrique échangée sans contact par couplage inductif et avec un rapport cyclique de 50%, et un deuxième(24) de ces deux bras est commandé pour qu'il commute à une fréquence supérieure à celle de ladite énergie électrique et avec un rapport cyclique modulé selon le courant alternatif circulant dans la cellule inductive secondaire (20) et la tension sur l'entrée alternative de cet onduleur/redresseur (23), et
- un deuxième mode de commande selon lequel le deuxième bras (24) est commandé pour qu'il commute à la fréquence de l'énergie électrique échangée sans contact par couplage inductif et avec un rapport cyclique de 50%, et le premier bras (24) est commandé pour qu'il commute à une fréquence supérieure à celle de ladite énergie électrique et avec un rapport cyclique modulé selon le courant alternatif circulant dans la cellule inductive secondaire (20) et la tension sur l'entrée alternative de cet onduleur/redresseur (23).

**4.** Circuit selon l'une quelconque des revendications précédentes, l'onduleur/redresseur (23) comprenant exactement deux bras de commutation (24), la cellule inductive secondaire (20) étant montée entre les deux points milieux (25) de cet onduleur/redresseur.

**5.** Circuit selon l'une quelconque des revendications précédentes, la cellule inductive secondaire (20) étant constituée par l'association en série du condensateur secondaire et de l'inductance secondaire.

**6.** Circuit selon la revendication 5, l'inductance secondaire comprenant :

- un enroulement électrique autre que du fil de Litz, notamment du fil électrique ou un enroulement obtenu par emboutissage d'au moins une plaque de métal tel que du cuivre pour définir une spirale, et
- un noyau magnétique.

**7.** Circuit selon l'une quelconque des revendications précédentes, le sous-circuit primaire (4) comprenant :

- une cellule inductive primaire (10) pour l'échange sans contact par couplage inductif d'énergie électrique avec la cellule inductive secondaire (20), et
- un onduleur/redresseur (21) comprenant au moins deux bras de commutation (7), chaque bras de commutation (7) comprenant deux interrupteurs électroniques commandables (12) disposés de part et d'autre d'un point milieu (8).

**8.** Composant pour l'alimentation électrique d'une unité de stockage d'énergie électrique (2), comprenant le circuit électrique (1) selon l'une quelconque des revendications précédentes, le composant définissant notamment une structure supportant de manière rigidement couplés entre eux le sous-circuit primaire (4) et le sous-circuit secondaire (6).

**9.** Dispositif pour l'alimentation électrique d'une unité de stockage d'énergie électrique (2), comprenant :

- le circuit électrique selon l'une quelconque des revendications 1 à 8,
- une borne de charge pour véhicule hybride ou électrique, dans laquelle est disposé le sous-circuit primaire (4) du circuit électrique (1) ou à laquelle est connectée le sous-circuit primaire (4), et
- un composant apte à être embarqué dans un véhicule hybride ou électrique, dans lequel est disposé le sous-circuit secondaire (6) du circuit électrique (1).

**10.** Procédé de réalisation d'un circuit d'alimentation électrique (1) d'une unité de stockage d'énergie électrique (2), ce circuit d'alimentation électrique comprenant :

- un sous-circuit primaire (4), connecté à un réseau de tension (5), et
- un sous-circuit secondaire (6), connecté à une unité de stockage d'énergie électrique (2),

le sous-circuit primaire (4) et le sous-circuit secondaire (6) étant configurés de manière à échanger sans contact par couplage inductif de l'énergie électrique,
le sous circuit-secondaire (6) comprenant :

- une cellule inductive secondaire (20) pour l'échange sans contact par couplage inductif d'énergie électrique avec le sous-circuit primaire (4), cette cellule inductive secondaire (20) mettant en œuvre un condensateur secondaire et une inductance secondaire,

- un onduleur/redresseur (23) apte à réaliser une adaptation d'impédance de l'impédance sur l'entrée alternative de cet onduleur/redresseur (23), indépendamment de l'impédance de l'unité de stockage d'énergie électrique (2), cet onduleur/redresseur (23) comprenant au moins deux bras de commutation (24), chaque bras de commutation comprenant deux interrupteurs électroniques (12) commandables disposés de part et d'autre d'un point milieu, et

- une unité de contrôle (3) configurée pour commander l'un de ces deux bras (24) pour qu'il commute à la fréquence ($F_{req}$) de l'énergie électrique échangée sans contact par couplage inductif et avec un rapport cyclique de 50%, et pour commander l'autre de ces deux bras (24) pour qu'il commute à une fréquence supérieure à celle de ladite énergie électrique et avec un rapport cyclique modulé selon le courant alternatif circulant dans la cellule inductive secondaire et la tension sur l'entrée alternative de cet onduleur/redresseur (23), procédé dans lequel :

- on connaît la valeur de la fréquence $F_{réq}$, la valeur de la puissance P selon laquelle s'effectue l'échange d'énergie électrique sans contact par couplage inductif, la valeur de la tension $V_{batt}$ aux bornes de l'unité de stockage d'énergie électrique (2), et la valeur du coefficient de couplage magnétique k entre le sous-circuit primaire (4) et le sous-circuit secondaire (6), et

- on détermine la capacité du condensateur secondaire et la valeur de l'inductance secondaire comme suit

$$[\mathrm{Math.\,14}]Cs = L_s \times 2 \times k \times \left(\frac{P}{V_{batt}^2}\right)^2$$

$$[\mathrm{Math.\,15}]Ls = \frac{1}{\sqrt{2\times k}}\frac{V_{batt}^2}{2\times\pi\times P\times F_{req}}$$

11. Procédé selon la revendication précédente, dans lequel l'unité de contrôle (3) est configurée pour commander les bras de commutation (24) de manière à imposer sur l'entrée alternative de l'onduleur/redresseur (23) une impédance équivalente dont la valeur $R_{ref}$ est déterminée comme suit

$$[\mathrm{Math.\,16}]Rref = \sqrt{\frac{k\times L_s}{C_s}}$$

[Fig 1]

Europäisches
Patentamt

European
Patent Office

Office européen
des brevets

# RAPPORT DE RECHERCHE EUROPEENNE

**Numéro de la demande**

EP 25 16 3119

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2019/190299 A1 (MOHAMED AHMED A S [US] ET AL) 20 juin 2019 (2019-06-20) * colonnes 9,10; figures 1-5 * ----- | 1-11 | INV. H02J50/12 B60L53/12 |
| A | US 10 790 691 B2 (QUALCOMM INC [US]) 29 septembre 2020 (2020-09-29) * alinéas [0023] - [0030]; figure 2 * ----- | 1-11 | |

| | DOMAINES TECHNIQUES RECHERCHES (IPC) |
|---|---|
| | H02J B60L |

Le présent rapport a été établi pour toutes les revendications

| Lieu de la recherche | Date d'achèvement de la recherche | Examinateur |
|---|---|---|
| Munich | 11 août 2025 | Grosse, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 16 3119

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-08-2025

| Document brevet cité au rapport de recherche | Date de publication | Membre(s) de la famille de brevet(s) | Date de publication |
|---|---|---|---|
| US 2019190299 A1 | 20-06-2019 | AUCUN | |
| US 10790691 B2 | 29-09-2020 | US 2018287405 A1 | 04-10-2018 |
| | | WO 2018182914 A1 | 04-10-2018 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- WO 2024068468 A